# EUROPÄISCHE PATENTSCHRIFT

(11) **EP 1 972 201 B1**
(45) Veröffentlichungstag und Bekanntmachung des Hinweises auf die Patenterteilung: **03.11.2010**
(21) Anmeldenummer: 08003154.5
(22) Anmeldetag: 21.02.2008
(51) Int. Cl.: A23L 1/216, A23L 1/217, A23L 1/308, D01B 1/00

(54) **Kartoffelfasern, Verfahren zur Herstellung derselben und Verwendung derselben**
Potato fibres, method for manufacturing potato fibres and usage thereof
Fibres de pomme de terre, leur procédé de fabrication et leur utilisation

(30) Priorität: 13.03.2007 DE 102007012063
(43) Veröffentlichungstag der Anmeldung: 24.09.2008
(73) Patentinhaber: Emsland-Stärke GmbH, 49824 Emlichheim (DE)
(72) Erfinder: Lotz, Martin, Dr., 49824 Emlichheim (DE); Jahn, Martin, 15938 Kasel-Golzig (DE); Buntrock, Paul, 49824 Emlichheim (DE); Eggengoor, Gerold, 49849 Wilsum (DE)
(74) Vertreter: Scholz, Volker

(56) Entgegenhaltungen:
- WO-A-97/33688
- US-A- 4 867 998
- US-A- 5 137 774
- US-B1- 6 740 342
- WOLFGANG BERGTHALLER, DETMOLD, JAN F. DIJKSTERHUIS UND MARTIN LOTZ EMILCHHEIM: "Kartoffelprotein und Kartoffelfasern - Koprodukte der Stärkeherstellung mit neuen Potentialen - 2. Kartoffelfasern" KARTOFFELBAU, Bd. 8, 2006, XP009099716 Detmold
- F. HOLM: "A New System for the Production of Starch and Protein from Potato" STARCH/ STÄRKE, Bd. 32, Nr. 8, 1980, Seiten 258-262, XP000604946 Weinheim

## Beschreibung

Die vorliegende Erfindung betrifft ein Verfahren zur Herstellung von Kartoffelfasern, danach hergestellte Kartoffelfasern sowie deren Verwendung.

Für den menschlichen Verzehr und ebenfalls für technische Anwendungen ist eine Vielzahl pflanzlicher Fasern bekannt. Fasern sind beispielsweise von Bedeutung für die Ernährung, die Lebensmitteltechnologie als Gelbildner und Emulgator sowie als Strukturgeber bzw. Texturierer in sowohl technischen als auch in Lebensmittelanwendungen. Von besonderer Bedeutung sind Fasern als Ballaststoffe, die für die menschliche Verdauung unverzichtbar sind.

Fasern können zum einen gezielt aus Pflanzen isoliert werden, können jedoch zum anderen auch durch Verwertung von Produktionsresten, wie beispielsweise durch Aufarbeitung von Trestern, hergestellt werden. Handelsübliche Fasern, wie z.B. Obst-, Gemüse- oder Zuckerrübenfasern, weisen diverse Nachteile auf, wie begrenzt verfügbare und teure Rohstoffe und/oder teure Herstellungsverfahren, eine geringe Funktionalität (z.B. Wasserbindekraft), eine ausgeprägte Eigenfarbe, einen ausgeprägten Eigengeschmack sowie ein teilweise allergenes Potential in notwendigerweise enthaltenen Begleitstoffen. Häufig ist die Herstellung teuer, z.B. bei Zitrusfasern aufgrund des teuren Rohstoffs Zitrusfrüchte. Probleme mit Allergien sind beispielsweise für Weizenkleie bekannt, die Reste von Weizengluten enthält und damit nicht von Zölikatie-Kranken verzehrt werden kann.

Aus der EP 0 413 681 B1 ist ein Verfahren zur Gewinnung von Kartoffelfasern bekannt. Solche Kartoffelfasern überwinden viele der oben erwähnten Nachteile und stellen einen wertvollen Beitrag für die menschliche Ernährung dar, da sie aus einem allergenfreien Rohstoff hergestellt werden, der Rohstoff in großen Mengen zur Verfügung steht und preiswerter ist als andere Rohstoffe zur Herstellung pflanzlicher Fasern.

Die gemäß der EP 0 413 681 B1 hergestellten Kartoffelfasern weisen jedoch unspezifische und stark schwankende Eigenschaften auf, was vermutlich auf dem Herstellungsverfahren beruht. Gleichzeitig weisen danach hergestellte Kartoffelfasern einen hohen Protein- und Glycoalkaloidgehalt auf. Glycoalkaloide sind bekanntermaßen toxisch, so daß deren Gehalt insbesondere in Lebensmitteln so gering wie möglich sein sollte. Der in dem Verfahren erhaltene und wieder eingesetzte Kartoffelsaft (Kartoffelfruchtwasser) enthält oxidierte Polyphenole, die den hergestellten Fasern eine dunkle, bräunliche Farbe und einen gewissen bitteren Geschmack verleihen.

Auch wenn von Kartoffelprodukten keine Allergien bekannt sind, so sind Proteine doch immer eine latente Allergiequelle, und daher sollte der Proteingehalt so gering wie möglich gehalten werden. Darüber hinaus verleihen die Restproteine den ansonsten neutral schmeckenden Kartoffelfasern einen gewissen kartoffeligen Geschmack.

Es ist eine Aufgabe der vorliegenden Erfindung, ein Verfahren zur Herstellung von Kartoffelfasem bereitzustellen, das die Nachteile des Stands der Technik überwindet. Insbesondere soll ein Verfahren bereitgestellt werden, das die natürlichen Vorteile der hergestellten Kartoffelfasern, insbesondere deren hohe Wasserbindekraft, Allergenfreiheit, hohe Verfügbarkeit des preiswerten Rohstoffs, bewahrt und ferner Kartoffelfasern mit einem niedrigen Gehalt an Glycoalkaloiden, mit einer hellen Farbe, einem neutralen Geschmack, einem geringen Proteingehalt bereitstellt.

Eine Aufgabe ist es ferner, entsprechend hergestellte Kartoffelfasern und deren Anwendungen bereitzustellen.

Die erste Aufgabe wird gelöst durch ein Verfahren nach Anspruch 1. Erfindungsgemäß sind auch Kartoffelfasern gemäß Anspruch 14 sowie deren Verwendung nach Anspruch 20. Bevorzugte Ausführungsformen ergeben sich aus den jeweiligen Unteransprüchen.

Überraschenderweise wurde festgestellt, daß das erfindungsgemäße Verfahren zur Herstellung von Kartoffelfasern äußerst preiswert ist, da bis zur Abtrennung von Kartoffelstärke und Fasern kein zusätzlicher Aufwand zur Kartoffelstärkeherstellung notwendig ist und erst danach das spezielle Herstellungsverfahren für die Kartoffelfasern beginnt, welches gegenüber dem Stand der Technik geringere Kosten verursacht und gleichzeitig die Qualität der Fasern gegenüber dem Stand der Technik verbessert. Als Ausgangsstoffe werden für das erfindungsgemäße Verfahren Stärkekartoffeln verwendet, die preiswert sind und in großer Menge zur Verfügung stehen.

Wesentlicher Vorteil des erfindungsgemäßen Verfahrens ist, daß Kartofellfasern mit einem geringen Glycoalkaloidgehalt von lediglich 100 bis 120 ppm hergestellt werden können, im Gegensatz zu einem Gehalt von 320 bis 450 ppm an Glycoalkaloiden, wenn beispielsweise das Verfahren der EP 0 413 681 B1 eingesetzt wird. Ein Gehalt von etwa 100 bis 120 ppm an Glycoalkaloiden entspricht etwa der Hälfte derjenigen Werte, die Kartoffeln natürlicherweise enthalten. Da Glycoalkaloide bekanntermaßen toxisch sind, liegt es auf der Hand, daß die nach dem erfindungsgemäßen Verfahren hergestellten Kartoffelfasern für den Verbraucher wesentlich gesünder sind als Kartoffelfasern, die nach Verfahren gemäß dem Stand der Technik hergestellt wurden. Der Proteingehalt der erfindungsgemäßen Kartoffelfasern liegt bei 3 bis 7%, was das allergene Potential dieser Fasern gegenüber dem Stand der Technik drastisch reduziert. Darüber hinaus erhöht sich dadurch die Reinheit der Fasern, was ihre Anwendbarkeit in Lebensmitteln und in der Technik deutlich erhöht, da Proteine vor allem bei pH-Verschiebungen und thermischer Beanspruchung unerwünschte und unkontrollierbare Verfärbungen und chemische Kondensations- und Spaltprodukte erzeugen. Weitere Vorteile sind ein geringerer Aschegehalt, eine hellere Farbe sowie ein hoher Anteil resistenter Stärke von etwa 8 bis 12%, die eine probiotische Wirkung ausübt.

Eine Übersicht der Zusammensetzung von erfindungsgemäß hergestellten Kartoffelfasern und von Kartoffelfasern aus dem Stand der Technik ist unten in Tabelle 1 gegeben.

**Tabelle 1**

| | Erfindungsgemäße Kartoffel fasern | Kartoffelfasern nach dem Stand der Technik |
|---|---|---|
| Feuchtigkeit | 5-8% | 10-12% |
| Protein | 3-7% | 10-15% |
| Asche | 2-3% | 3-5% |
| Total Dietary Fibres (TDF)* | 70-75% | 58-65% |
| Resistente Stärke* * | 12-14% | 11-12% |
| Verdauliche Stärke* | 8-9% | 9-15% |
| Wasserbindevermögen** | 1:10-1:15 | 1:7-1:15 |

| | | |
|---|---|---|
| * Methode LAOAC 985,29, 991,43, 2002,02 ** Methode 2,5% Trockensubstanz, 60 min rühren, 20 min Zentrifugieren bei 3.000 g | | |

Wesentliches Merkmal des erfindungsgemäßen Verfahrens ist, daß das Kartoffelfruchtwasser, das für viele negative Eigenschaften verantwortliche Stoffe enthält, im Herstellungsverfahren so früh und so umfassend wie möglich von den Fasern abgetrennt wird. Die Kontaktzeit zwischen den Fasern und dem Kartoffelfruchtwasser sollte dabei so kurz wie möglich gehalten werden, damit dessen für Fasern negative Stoffe nicht in die Fasern eindringen können, wo sie festgehalten werden und nicht mehr (oxidierte Phenole, die eine dunkle Farbe und ab einen gewissen Gehalt einen bitteren Geschmack verursachen) oder nur mit hohem und teuren Aufwand (Proteine und Glycoalkaloide) aus den Fasern eliminiert werden können.

Ferner kann im erfindungsgemäßen Verfahren das Trocknen der Kartoffelfasern so optimiert werden, daß eine Vermahlung der Fasern entfallen kann und trotzdem ein feinkörniges Produkt entsteht, was für den Anwender von Vorteil ist, da die Vermischung mit weiteren Zutaten einfacher und rascher erfolgen kann. Dies wird durch den Schritt der Vermischung mit zuvor bereits getrockneten Kartoffelfasern erreicht. Auch die gewünschte Bindung von Wasser aus einem Zutatengemisch erfolgt rascher, wenn die Austauschfläche mit den Fasern, die umgekehrt proportional zur Teilchengröße der Fasern ist, größer ist. Gleichzeitig wird durch den Verzicht auf einen Mahlschritt vermieden, daß im Übermaß unerwünschter Faserstaub entsteht, der bezüglich der Anwendung Verluste und für Beschäftigte, die im Herstellungsverfahren eingesetzt werden, eine Belästigung darstellt.

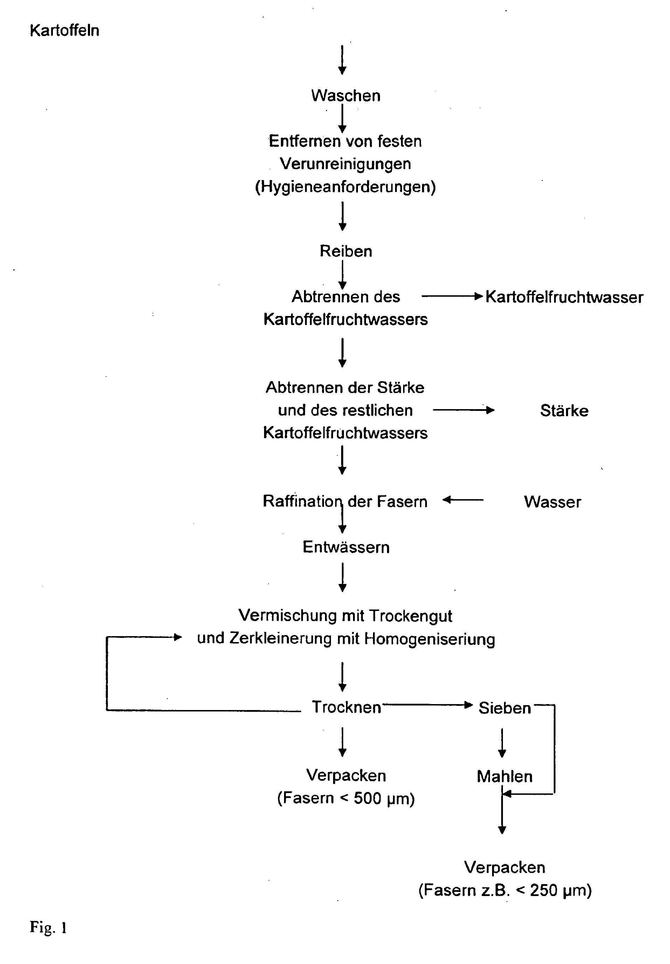

Weitere Merkmale und Vorteile des Gegenstands der vorliegenden Erfindung ergeben sich aus der detaillierten Beschreibung des erfindungsgemäßen Verfahrens unter Bezugnahme auf die beigefügte Figur und die folgenden detaillierten Beispiele, wobei Figur 1 ein Fließschema einer bevorzugten Ausführungsform des erfindungsgemäßen Verfahrens darstellt.

Bei der Durchführung des erfindungsgemäßen Verfahrens werden Kartoffeln zunächst, bevorzugt in mehreren Stufen, gründlich gewaschen, in einer letzten Stufe mit sauberem Wasser, z.B. Trinkwasser oder Wasser in vergleichbarer Qualität. Optional, jedoch bevorzugt, werden in einer folgenden Stufe feste Verunreinigungen entfernt, um Hygieneanforderungen zu genügen. Eine Möglichkeit zur Abtrennung der Verunreinigungen besteht beispielsweise in einem manuellen Auslesen solcher Feststoffe, die beispielsweise Krautstücke oder Torf sein können. Gleichzeitig kann optional auch an den Kartoffeln noch anhaftendes Waschwasser entfernt werden, vorzugsweise durch Vibration, wodurch das Waschwasser abgeschüttelt wird.

Die nun sauberen Kartoffeln werden zu einem feinen Brei zerrieben und anschließend das Kartoffelfruchtwasser soweit wie technisch machbar abgetrennt. Die Abtrennung des Kartoffelfruchtwassers erfolgt bevorzugt mit Horizontalzentrifugen, Dekanter genannt, jedoch sind grundsätzlich hierfür alle bekannten Abscheider, bevorzugt Zentrifugenabscheider, geeignet. Mit dem Kartoffelfruchtwasser werden im wesentlichen alle für die Qualität schädlichen Stoffe der Kartoffeln abgetrennt, d.h. im wesentlichen Polyphenole, das Enzym Polyphenoloxidase PPO, Protein, Glycoalkaloide, jedoch auch lösliche Salze bzw. Mineralstoffe. Bevorzugt wird in diesem Schritt (Schritt d)) ein Abscheidegrad des Kartoffelfruchtwassers von etwa 50% bis etwa 70% des gesamten vorhandenen Kartoffelflruchtwassers erreicht.

In der Festtofffraktion nach der Abtrennung des Kartoffelfruchtwassers verbleiben die Feststoffe Stärke und Fasern, ggf. zusammen mit einem Rest an Kartoffelfruchtwasser. Die Feststofffraktion (Brei) wird dann durch Spülen mit Wasser, das ggf. im Kreislauf geführt werden kann und daher gewisse Mengen an Kartoffelfruchtwasser enthalten kann, bevorzugt in Zentrisieben, in Stärke und Fasern aufgetrennt, wobei die Stärkekörner durch das Wasser als sogenannte Stärkerohmilch in im wesentlichen flüssiger Form anfallen und anschließend einer Stärkeraffination zugeführt werden können. Die nun schon weitestgehend von störenden Bestandteilen befreite Rohfaser wird von der flüssigen Fraktion abgetrennt, bleibt beispielsweise bei Einsatz von Zentrisieben auf den Siebbespannungen zurück, und wird anschließend ihrerseits raffiniert. Neben den erwähnten Zentrisieben können auch Hydrozyklone und andere Abscheider eingesetzt werden, die die Dichteunterschiede zwischen leichten Fasern und schweren Stärkekörnern ausnutzen.

Das Zerreiben der Kartoffeln wird im erfindungsgemäßen Verfahren bevorzugt so durchgeführt, daß einerseits die Zellwände der Kartoffeln so weit zerstört werden, daß die Stärkekörner im notwendigen Ausmaß freiliegen und anschließend gewonnen werden können, jedoch die Faserteilchen, die aus dem Schalen- und Zellwandmaterial bestehen, größer als die Stärkekörner bleiben, so daß diese mittels des Größenunterschieds isoliert werden können.

Die nach der Abtrennung der Stärke erfolgende Raffination der Rohfasern wird durch Auswaschen mit Wasser durchgeführt. Dabei ist es besonders bevorzugt, einen intensive Vermischung der Fasern mit dem Wasser zu erreichen, damit Kosten und Umweltbelastung durch einen hohen Wasserverbrauch minimiert werden können. Zu diesem Zweck sind die obengenannten Zentrisiebe hervorragend geeignet, es können jedoch auch andere Techniken, wie Rührbehälter und anschließende Zentrifugation (Dekanter, Separator, Hydrozyklon) genutzt werden. Besonders bevorzugt ist das Raffinieren der Fasern unter Einsatz von Frischwasser, und zwar mehrstufig im Gegenstrom. Ein Teil des Abwassers aus dieser Raffination kann für Schritt (e) eingesetzt werden, der Rest wird der Entsorgung zugeführt.

Folgend der Raffination werden die behandelten Fasern, die schon eine relativ hohe Trockenmasse aufweisen, bevorzugt vorentwässert, vorzugsweise über eine Zentrifuge, besonders bevorzugt eine Dekanterzentrifuge. Andere Entwässerungstechniken, wie beispielsweise Pressen, erreichen höhere Trockenstoffgehalte als Zentrifugen, jedoch ist der notwendige Aufwand bezogen auf abgetrenntes Wasser überproportional hoch, da aus hygienischen und ernährungsphysiologischen Gründen keine Zuschlagsstoffe, die beispielsweise bei der Verwendung der Fasern als Tierfutter üblich sind (wie Kalk oder Flockungspolymere), verzichtet werden muß.

Im folgenden Schritt erfolgt eine Vermischung der vorentwässerten Fasern mit bereits getrockneten Fasern, um die Fasern in einem Durchgang durch den Trockner als Fertigprodukt konfektionieren zu können. Dabei sollte das Mischen sehr intensiv erfolgen, um nasse und trockene Nester zu vermeiden, die den Trocknungsschritt stören könnten. Durch die Vermischung wird eine gute Homogenisierung und Auflockerung des erhaltenen Materials sowie eine Zerkleinerung der Klumpen erreicht. Die Vermischung kann bevorzugt durch sogenannte Paddelmischer erreicht werden. Eine Vermischung kann auch durch Einsatz einer (kleinen) Mühle erfolgen.

Nach der Vermischung werden die Fasern weiter getrocknet, wobei alle bekannten Arten von Feststofftrocknern, wie Wirbel-, Flugschicht-, Strom- oder auch Sprühtrockner, eingesetzt werden können. Das nach der Trocknung erhaltene Trockengut kann, zumindest teilweise, im Kreislauf geführt werden und den Naßfasern in Schritt g) zugeführt werden. Ein solches zurückgeführtes Trockengut wird üblicherweise auch als "add-back" bezeichnet. Durch die intensive Vermischung werden bei der Trocknung Faserteilchen erhalten, die ohne zusätzlichen Vermahlungsschritt eine Größe von kleiner als 500 µm aufweisen können. Sind jedoch Fasern erwünscht, die eine kleinere Größe aufweisen, beispielsweise maximal 250 µm, kann ohne Schwierigkeiten der Überschlag nach einer Siebung über ein Sieb mit 250 µm Maschenweite erfolgen, was jedoch vorteilhaft eine kleinere Mühle und einen geringeren energetischen Aufwand als nach dem Stand der Technik erfordert. Gleichzeitig werden dadurch die Fasern geschont und ihre anwendungstechnischen Eigenschaften, vor allem die Wasserbindung und die helle Farbe, bleiben besser erhalten. Auch werden die noch enthaltenen Stärkekörner durch Verzicht auf Mahlung oder zumindest die Beschränkung auf einen Teilstrom durch die notwendigerweise auftretende Wärmeentwicklung nicht geschädigt, wodurch sie ihren verdauungsresistenten und damit präbiotischen Charakter nicht verlieren.

Vorzugsweise kann nach dem Trocknen eine sogenannte Brandsichtung stattfinden, bevorzugt über 1.000 µm, um verbrannte und zusammengeklumpte Faserstücke- und -brocken sowie Fremdmaterial (z.B. Metallteile) aus der Anlage zur lebensmitteltechnischen Hygienisierung und Endkonfektionierung zu entfernen. Diese Brandsichtung wird grundsätzlich bei allen Schüttgütern durchgeführt, egal ob sie natürlichen oder technischen Ursprungs sind. Das Brandsichten ist somit Stand der Technik.

Anschließend können die Fasern entsprechend verpackt und gelagert oder verwendet werden.

Die hergestellten Kartoffelfasem bestehen im wesentlichen aus dem Zellmaterial und den Schalenbestandteilen der Kartoffeln. Aus den Schalenresten, von denen ein Teil während des gründlichen Waschens entfernt wird, stammt das Lignin, was etwa 2 bis 3 Gew.-% des Fasermaterials ausmacht, bezogen auf das Gesamtgewicht der Kartoffelfaser. Die Zellwände bestehen aus Cellulose, Hemicellulose und Pektinen. Die Kartoffelfasern enthalten über diese typischen Fasermaterialien hinaus noch Reste an Mineralstoffen (Asche), Protein und Stärke in resistenter und verdaulicher Form. Die erfindungsgemäßen Fasern besitzen eine größere Reinheit als Kartoffelfasern nach dem Stand der Technik, da die Gehalte der Fremdbestandteile Protein und Mineralstoffe mit 2 bis 3 Gew.-% bzw. 3 bis 7 Gew.-% deutlich niedriger sind als gemäß dem Stand der Technik. Der Stärkegehalt ist insgesamt recht ähnlich zum Stand der Technik, jedoch enthalten die erfindungsgemäßen Fasern einen hohen Anteil an resistenter Stärke, die erst im Dickdarm verstoffwechselt wird und daher einen gesundheitlichen, wichtigen, positiven, präbiotischen Effekt bewirkt, indem die Darmflora positiv beeinflußt wird. Die resistente Stärke beträgt etwa 8 bis 12 Gew.-%, bezogen auf die gesamte Fasertrockensubstanz. Ein gravierender Vorteil der Fasern ist ferner der um etwa 2/3 reduzierte Gehalt an Glycoalkaloiden, die ein starkes Gift sind, weshalb man bekanntlich grundsätzlich keine grünen Kartoffeln und Tomaten verzehren sollte, da diese Glykoalkaloide in angereicherter Form enthalten. Die Farbe der erfindungsgemäß hergestellten Kartoffelfasern ist hell und wenig verfärbt mit einem cremefarbenen Einschlag.

Wie bereits oben ausgeführt, werden die Vorteile des Gegenstands der vorliegenden Erfindung insbesondere durch das Merkmal erreicht, daß das Kartoffelfruchtwasser mit seinen Störsubstanzen im Herstellungsverfahren in einer frühen Stufe und im maximal möglichen Umfang abgetrennt wird. Von Bedeutung sind ferner die schonende Trocknung mit Verzicht auf eine Mahlung, soweit die von der Anwendung geforderte Körnung dies zuläßt. Die frühzeitige Abtrennung des Kartoffelfruchtwassers verhindert, daß Polyphenole und PPO in die Fasern eindringen können. Zusammen mit der schonenden Trocknung wird lediglich eine geringe Verfärbung (cremefarben) verursacht, im Gegensatz zu einer orangen oder braunen Verfärbung von Kartoffelfasern aus dem Stand der Technik. Ein geringerer Ligningehalt verringert zusätzlich den Graustich der Fasern, wodurch sie heller (weißer) erscheinen. Die Farbwerte werden wie im Stand der Technik bekannt durch L⁺-Werte (Weißheitsgrad, Helligkeit) und b⁺-Werte (Gelb-Orange-Stich) ausgedrückt bzw. gemessen.

Die wichtigste funktionelle Eigenschaft der Fasern ist ihre Wasserbindekapazität, die im wesentlichen aus dem eigentlichen Fasermaterial, d.h. Cellulose, Hemicellulosen und Pektinen, stammt. Hemicellulosen und Pektine faßt man gemeinhin als lösliche Fasern auf, während Cellulose und eingeschränkt Lignin den unlöslichen Teil der Fasern darstellen. Ernährungsphysiologisch interessant sind die unlöslichen Stoffe, Ballaststoffe genannt, da sie den Darm zu einer stärkeren mechanischen Bewegung anregen, was zu regelmäßigerem und weicherem Stuhl führt. Auch wird diskutiert, daß das Darmkrebsrisiko verringert wird, wobei nicht ganz klar ist, ob hier nicht der präbiotische Effekt der löslichen Fasern ebenfalls noch eine gewisse Rolle spielt. Die ungewöhnlich hohe Wasserbindekraft der Kartoffelfasern von etwa 1:15 bis 1:20, die von anderen natürlichen Fasern kaum erreicht wird, macht sie für vielfältige Anwendungen in Lebensmitteln und Technik interessant. Da die Wasserbindung sowohl chemisch durch Anlagerung und Bindung von Wasserteilchen an das Fasermaterial als auch physikalisch durch Einlagerung in Hohlräume stattfinden kann, wird deutlich, wie wichtig eine schonende Behandlung der Fasern ist, die mit dem erfindungsgemäßen Verfahren erreicht wird. Durch Vermahlung spleißen die Enden der Fasern auf und das Volumen der zur Einlagerung zur Verfügung stehenden Hohlräume verringert sich, was sich in einer geringeren Wasserbindung bemerkbar macht. Auch durch geringere Teilchengrößen, vor allem staubfeine Teilchen, verschiebt sich das Verhältnis von Speichervolumen zu Fasermasse immer mehr zu Ungunsten des Wasserbindevolumens.

Folgende Beispiele beschreiben die vorteilhafte Verwendung der erfindungsgemäßen Kartof felfasern.

### Beispiel 1 (Tagliatelle (Bandnudeln))

420 g Durum Hartweizen gemahlen
280 g Wasser
22 g Kartoffelfasern
8 g Salz
730 g

### Herstellung:

Zuerst werden alle Zutaten in einer Schüssel vorgelegt und 2 Minuten miteinander vermischt. Anschließend wird auf einer höheren Stufe die Masse zu einem kompakten, nicht mehr feuchten Teig geknetet, der nicht mehr klebt. Nun wird der Teig zu einer Kugel geformt mit Klarsichtfolie abgedeckt und 1 Stunde ruhe gelassen. Danach wird der Teig auf einer leicht bemehlten Arbeitsfläche zu einer dünnen Platte ausgerollt und in die Nudelmaschine eingefüllt. Jetzt werden die Bandnudeln geschnitten und zum Trocknen aufgehängt oder kurz blanchiert, um sie anschließend einzufrieren.

Anhand der hergestellten Bandnudeln werden die Vorteile der erfindungsgemäßen Kartoffelfasem offensichtlich. Die Bandnudeln erhalten einen hohen Gehalt an Ballaststoffen, was zu einem Gesundheitsvorteil führt. Ferner ist aufgrund der höheren Wasserbindung der Nudeln ein geringerer Materialeinsatz notwendig.

### Beispiel 2 (Brötchen)

1010 g Weizenmehl Type 550
655 g Wasser
50 g Hefe
44 g Kartoffelfasern
20 g Speisesalz
10 Mono- und Diglyceride von Speisefettsäuren
9 g Zucker
730 g

### Herstellung:

Hefe in einem Teil des Wassers auflösen. Danach die Trockenstoffe in einer Schüssel vorlegen und mit einem Knethaken 2 Minuten mischen und anschließend auf mittlerer Stufe zu einem viskosen Teig verarbeiten. Teigruhe 10 Minuten. Teiglinge formen, 20 Minuten ruhen lassen und dann Ausbund drücken. In einem Kombidämpfer zuerst bei 35 °C und 75 % Luftfeuchte 30 Minuten gehen lassen, danach bei 180 °C 13 Minuten lang und bei 60 % Feuchte backen. Am Ende bei 190 °C und offenen Schwaden 5 Minuten fertig backen.

Der Einsatz der erfindungsgemäßen Kartoffelfasern bei der Herstellung von Brötchen resultiert in einem geringeren Backverlust um 2,6%. Ferner wird vermehrt Wasser in dem Gebäck gebunden, die Krume bleibt angenehm feucht, was ebenfalls in einem positiven Mundgefühl resultiert.

### Beispiel 3 (Hamburger)

Zutaten für ca. 11 Hamburger ä 70 g:
533,5 g mageres Rindfleisch (Hüfte)
160 g Schweinebauch (Flomen)
10 g Salz
0,5 g schwarzer gemahlener Pfeffer
24 g Kartoffelfasern
72 g Wasser
800 g

### Zubereitung:

Rindfleisch und Schweinebauch durch die 5 mm Scheibe eines Fleischwolfes drehen. Gemische Gewürze sowie das Salz dazugeben und durcharbeiten. Fleischasse zu runden Hamburger-Paddies formen und diese 15 Minuten bei 150 °C im Konvektomaten trocken garen.

Bei Verwendung der erfindungsgemäßen Kartoffelfasern bei der Herstellung von Hamburgern wird vorteilhaft die Fett- und Wasserbindekraft verstärkt, beispielsweise wird bei einem Einsatz von mehr als 3 Gew.-% an Kartoffelfasern kein Austritt von Wasser mehr beobachtet.

### Beispiel 4 (Speiseeis)

2,8 g Mono- und Diglyceride von Speisefettsäuren (E 471)
95 g kristallzucker, fein
0,1 g Karotin
60 g Butterreinfett
0,2 g Vanilleschote
7 g Bourbon-Vanillezucker
1,2 g Verdickungsmittel (Johanniskernmehrl [E 410]/Caragenan [E 407])
26 g Vollmilchpulver
6 g Zitronensaft
250 g Sahne
370 g Milch 3,5 % Fett
1 g Salz
4,1 g Kartoffelfasern
823,4 g

### Zubereitung:

Milch und Sahne auf 70 °C erhitzen. Danach Trockenstoffe zugeben und unterrühren, bis sich alles komplett gelöst hat (nicht kochen da sonst Separation). Mischung mit Handrührgerät 5 Minuten auf höchster Stufe aufschlagen (bei 70 °C), anschließend die Mischung ca. 20 Minuten im Gefrierschrank abkühlen lassen (nicht Kristallisieren!). Nun nochmals 5 Minuten aufschlagen. Danach die Masse in eine Eismaschine füllen und in ca. 45 Minuten auf -6 °C gefrieren lassen. Abschließend das Eis umfüllen, beschriften und wegfrieren.

Bei Einsatz der erfindungsgemäßen Kartoffelfasern bei der Herstellung von Speiseeis können mehr Ballaststoffe eingearbeitet werden, was gesundheitlich vorteilhaft ist. Aufgrund einer geringeren Kristallisation ist die Integration von mehr Wasser möglich. Insbesondere wurde auch ein angenehmes Mundgefühl des hergestellten Speiseeises festgestellt.

### Beispiel 5 (Feine Backwaren (Sandkuchen))

87,5 g Weizenmehl Typ 405
87,5 g Weizenstärke
125 g Butter
0,5 g Salz
10 g Backpulver
125 g Zucker
125 g Vollei
18 g Kartoffelfasern
4 g Vanillinzucker
33 g Wasser
4,5 g Zitronensaft
620 g

Mit den angegebenen Bestandteilen wurde ein Kuchenteig hergestellt und in eine Kastenform gefüllt. Der eingefüllte Teig wurde anschließend bei 190°C für 35 Minuten gebacken.

Auch bei der Herstellung von feinen Backwaren kann aufgrund eines erhöhten Anteils an Ballaststoffen ein Gesundheitsvorteil erzielt werden. Ebenfalls bleibt der Kuchen durch die bessere Wasserbindung länger frisch. Im in Beispiel 5 hergestellt Kuchen sank die Feuchtigkeit nach 13 Tagen von 23,9% auf 16,6%, während in einem üblichen Standardkuchen ohne Kartoffelfasem die Feuchtigkeit von 20,7% auf 14,0% absank. Dies kann beispielsweise vorteilhaft sein für die Lieferlogistik von Großbäckereien über Zwischengroßlager bis zum Supermarkt, so daß für das Produkt im Supermarkt eine längere Mindesthaltbarkeitsdauer angegeben werden kann.

Als technische Anwendungen für die erfindungsgemäß hergestellten Kartoffelfasern ist beispielsweise die Verwendung derselben in Asphalt und Fugenmasse bzw. Fugenmörtel zur Armierung anzuführen. Unter Armierung versteht man das Versteifen einer erstarrten flüssigen Masse durch ein Feststoffskelett. Das wohl bekannteste Beispiel ist das Stahlgerüst in Stahlbeton, das Armierungseisen genannt wird.

## Patentansprüche

1. Verfahren zur Herstellung von Kartoffelfasern, welches die Schritte umfaßt:
a) Waschen von Kartoffeln;
b) optionales Entfernten fester Verunreinigungen und von an den Kartoffeln anhaftendem Waschwasser;
c) Zerreiben der Kartoffeln zu einem Brei;
d) Abtrennen von Kartoffelfruchtwasser;
e) Abtrennen von Stärke und ggf. restlichem Kartoffelfruchtwasser durch Spülen mit Wasser, um Rohfasern zu erhalten;
f) Raffinieren der Rohfasern;
g) Zumischen bereits zuvor getrockneter Kartoffelfasern; und
h) Trocknen der Fasern.

2. Verfahren nach Anspruch 1, **dadurch gekennzeichnet, daß** das Waschen in Schritt a) in einem letzten Schritt mit Trinkwasser und/oder Wasser vergleichbarer Qualität erfolgt.

3. Verfahren nach Anspruch 1 oder 2, **dadurch gekennzeichnet, daß** in Schritt b) Verunreinigungen manuell und/oder Wasser durch Vibration entfernt wird bzw. werden.

4. Verfahren nach einem der vorangehenden Ansprüche, **dadurch gekennzeichnet, daß** in Schritt d) das Abtrennen mit Zentrifugalabscheidern, bevorzugt Horizontalzentrifugen, erfolgt.

5. Verfahren nach einem der vorangehenden Ansprüche, **dadurch gekennzeichnet, daß** in Schritt d) 50% bis 70% des gesamten Kartoffelfruchtwassers abgetrennt werden.

6. Verfahren nach einem der vorangehenden Ansprüche, **dadurch gekennzeichnet, daß** das Abtrennen in Schritt e) in Zentrisieben und/oder Hydrocyclonen erfolgt.

7. Verfahren nach einem des vorangehenden Ansprüche, **dadurch gekennzeichnet, daß** nach Schritt e) abgetrennte Stärke zu einer Stäzkeraffination überführt wird.

8. Verfahren nach einem der vorangehenden Ansprüche, **dadurch gekennzeichnet, daß** das Zerreiben in Schritt c) so erfolgt, daß Faserteilchen größer als durch das Zerreiben im wesentlichen freigelegte Stärkekörner der Kartoffeln verbleiben.

9. Verfahren nach einem der vorangehenden Ansprüche, **dadurch gekennzeichnet, daß** die Raffination der Rohfasern in Schritt f) durch Auswaschen mit Wasser, insbesondere über Zentrisiebe, Dekanter und/oder Separatoren erfolgt.

10. Verfahren nach einem der vorangehenden Ansprüche, **dadurch gekennzeichnet, daß** die Fasern nach Schritt f) und vor Schritt g) vorentwässert werden, bevorzugt unter Verwendung einer Zentrifuge.

11. Verfahren nach Anspruch 10, **dadurch gekennzeichnet, daß** das Massenverhältnis von Naß- zu Trockenfasern etwa 1:1 bis 1:6 beträgt.

12. Verfahren nach einem der vorangehenden Ansprüche, **dadurch gekennzeichnet, daß** nach Schritt h) die erhaltenen Fasern gemahlen werden.

13. Verfahren nach einem der vorangehenden Ansprüche, **dadurch gekennzeichnet, daß** die Fasern nach dem Trocknen in Schritt h) brandgesichtet werden.

14. Kartoffelfasern, erhältlich nach einem Verfahren nach einem der Ansprüche 1 bis 13, mit einem Glycoalkaloidgehalt von 100 bis 120 ppm, bezogen auf die Kartoffelfasern, einem Ligningehalt von etwa 2 bis etwa 3 Gew.-%, bezogen auf das Gesamtgewicht der Kartoffelfasern, einem Gehalt an resistenter Stärke von etwa 8 bis etwa 12 Gew.-%, bezogen auf das Gesamtgewicht der Kartoffelfasern, einem Proteingehalt von etwa 3 bis etwa 7 Gew.-%, bezogen auf das Gesamtgewicht der Kartoffelfasern, und einem Aschegehalt von etwa 2 bis etwa 3 Gew.-%, bezogen auf das Gesamtgewicht der Kartoffelfasern.

15. Verwendung von Kartoffelfasern nach Anspruch 14 als Lebensmittelbestandteil sowie für technische Anwendungen.

16. Verwendung nach Anspruch 15 in Fleisch- und Wurstwaren, Backwaren, Babynahrung, funktionellen Nahrungsmitteln, Asphalt, Fugenmasse oder Fugenmörtel zur Armierung.

## Claims

1. Method for production of potato fibres, which comprises the steps:
a) washing the potatoes;
b) optional removal of solid impurities and of rinsing water adhering to the potatoes;
c) grinding the potatoes into a pulp;
d) separating potato juice;
e) separating starch and any remaining potato juice by rinsing with water, in order to obtain raw fibres;
f) refining the raw fibres;
g) mixing in potato fibres which have previously been dried; and
h) drying the fibres.

2. Method according to claim 1, **characterised in that** the washing in step a) takes place in a final step using drinking water and/or water of comparable quality.

3. Method according to claim 1 or 2, **characterised in that** in step b) impurities are removed manually and/or water is removed by vibration.

4. Method according to one of the preceding claims, **characterised in that** in step d) the separation takes place using centrifugal separators, preferably horizontal centrifuges.

5. Method according to one of the preceding claims, **characterised in that** in step d) 50% to 70% of the total potato juice is separated.

6. Method according to one of the preceding claims, **characterised in that** the separation in step e) takes place in centrisieves and/or hydrocyclones.

7. Method according to one of the preceding claims, **characterised in that** after step e), separated starch is subjected to starch refining.

8. Method according to one of the preceding claims, **characterised in that** the grinding in step c) takes place in such a way that fibre particles remain which are larger than grains of starch in the potatoes which are substantially revealed by the grinding.

9. Method according to one of the preceding claims, **characterised in that** the refining of the raw fibres in step f) takes place by rinsing with water, in particular using centrisieves, decanters and/or separators.

10. Method according to one of the preceding claims, **characterised in that** the fibres are pre-drained after step f) and before step g), preferably using a centrifuge.

11. Method according to claim 10, **characterised in that** the mass ratio of wet to dry fibres is approximately 1:1 to 1:6.

12. Method according to one of the preceding claims, **characterised in that** after step h), the fibres obtained are ground.

13. Method according to one of the preceding claims, **characterised in that** after drying in step h), the fibres are fine-screened.

14. Potato fibres obtainable according to a method according to one of claims 1 to 13, with a glycoalkaloid content of 100 to 120 ppm in relation to the potato fibres, a lignin content of approximately 2 to approximately 3% by weight based on the total weight of the potato fibres, a content of resistant starch of approximately 8 to approximately 12 % by weight based on the total weight of the potato fibres, a protein content of approximately 3 to approximately 7% by weight based on the total weight of the potato fibres, and an ash content of approximately 2 to approximately 3% by weight based on the total weight of the potato fibres.

15. Use of potato fibres according to claim 14 as a foodstuff ingredient and for technical applications.

16. Use according to claim 15 in meat and sausage products, bakery products, baby foods, functional foods, asphalt, joint filler or pointing mortar for reinforcement.

## Revendications

1. Procédé pour la fabrication de fibres de pomme de terre, comportant les étapes suivantes :
a) lavage de pommes de terre ;
b) élimination facultative d'impuretés solides et d'eau de lavage adhérant aux pommes de terre ;
c) broyage des pommes de terre pour obtenir une bouillie ;
d) séparation de l'eau végétale de pomme de terre ;
e) séparation de l'amidon et de l'eau végétale de pomme de terre résiduelle le cas échéant, pour obtenir des fibres brutes ;
f) raffinage des fibres brutes ;
g) mélange de fibres de pomme de terre déjà préalablement séchées ; et
h) séchage des fibres.

2. Procédé selon la revendication 1, **caractérisé en ce que** le lavage de l'étape a) est effectué lors d'une dernière phase avec de l'eau potable et/ou de l'eau de qualité comparable.

3. Procédé selon la revendication 1 ou la revendication 2, **caractérisé en ce que**, lors de l'étape b), les impuretés sont éliminées manuellement et/ou l'eau est éliminée par vibrations.

4. Procédé selon l'une des revendications précédentes, **caractérisé en ce que**, lors de l'étape d), la séparation est effectuée avec des séparateurs centrifuges, de préférence des centrifugeuses horizontales.

5. Procédé selon l'une des revendications précédentes, **caractérisé en ce que**, lors de l'étape d), 50 % à 70 % de l'eau végétale de pomme de terre totale sont séparés.

6. Procédé selon l'une des revendications précédentes, **caractérisé en ce que** la séparation de l'étape e) est effectuée au moyen de cribles centrifuges et/ou d'hydrocyclones.

7. Procédé selon l'une des revendications précédentes, **caractérisé en ce qu'**après l'étape e), l'amidon séparé est amené à un raffinage d'amidon.

8. Procédé selon l'une des revendications précédentes, **caractérisé en ce que** le broyage de l'étape c) est effectué de manière que demeurent des particules de fibres de grandeur supérieure aux grains d'amidon de pomme de terre essentiellement libérés par le broyage.

9. Procédé selon l'une des revendications précédentes, **caractérisé en ce que** le raffinage des fibres brutes lors de l'étape f) est effectué par lavage à l'eau, en particulier au moyen de cribles centrifuges, de décanteurs et/ou de séparateurs.

10. Procédé selon l'une des revendications précédentes, **caractérisé en ce que** les fibres sont préalablement déshydratées après l'étape f) et avant l'étape g), de préférence en utilisant une centrifugeuse.

11. Procédé selon la revendication 10, **caractérisé en ce que** le rapport massique entre fibres mouillées et fibres sèches est compris sensiblement entre 1/1 et 1/6.

12. Procédé selon l'une des revendications précédentes, **caractérisé en ce que** les fibres obtenues sont moulues après l'étape h).

13. Procédé selon l'une des revendications précédentes, **caractérisé en ce que** les fibres sont soumises à un tri des fibres brûlées après le séchage de l'étape h).

14. Fibres de pomme de terre, disponibles par un procédé selon l'une des revendications 1 à 13, ayant une teneur en glycoalcaloïdes de 100 à 120 ppm, une teneur en lignine de près de 2 % à près de 3 % en poids, par rapport au poids total des fibres de pomme de terre, une teneur en amidon résistant de près de 8 % à près de 12 % en poids, par rapport au poids total des fibres de pomme de terre, une teneur en protéines de près de 3 % à près de 7 % en poids, par rapport au poids total des fibres de pomme de terre, et une teneur en cendres de près de 2 % à près de 3 % en poids, par rapport au poids total des fibres de pomme de terre.

15. Utilisation de fibres de pomme de terre selon la revendication 14 comme ingrédient pour produits alimentaires ainsi que pour des applications techniques.

16. Utilisation selon la revendication 15 dans des préparations de viandes et charcuteries, produits de boulangerie-pâtisserie, alimentation pour nourrissons, aliments fonctionnels, asphalte, masse à jointoyer ou mortier de jointoiement pour armature.
